# EUROPEAN PATENT SPECIFICATION

(11) **EP 2 969 533 B1**
(45) Date of publication and mention of the grant of the patent: **19.02.2020**
(21) Application number: 14721033.0
(22) Date of filing: 11.03.2014
(51) Int. Cl.: B32B 37/12, D04H 1/46, D04H 1/49, D04H 1/498, E04B 1/74, B32B 5/06, B32B 5/08, B32B 7/12, B32B 5/18, B32B 37/24, B32B 5/02, E04B 1/88, B32B 5/24

(54) **COMPOSITES COMPRISING NONWOVEN STRUCTURES AND FOAM**
VERBUNDSTOFFE MIT VLIES UND SCHAUMSTOFF
COMPOSITES COMPRENANT DES STRUCTURES NON TISSÉES ET DE LA MOUSSE

(30) Priority: 15.03.2013 US 201313840794
(43) Date of publication of application: 20.01.2016
(60) Divisional application: 19188798.3
(73) Proprietor: National Nonwovens Inc., Easthampton, MA 01027 (US)
(72) Inventor: LAWRENCE, Mark, Gregory, Westfield, MA 01085 (US); D'ELIA, Conrad, Anthony, Westfield, MA 01085 (US); CENTOFANTI, Anthony, Joseph, Avon, CT 06001 (US); VIVEIROS, Paul, Anthony, Westfield, MA 01085 (US)
(74) Representative: Hoffmann Eitle
(86) International application number: PCT/US2014/022982
(87) International publication number: WO 2014/150336

(56) References cited:
- EP-A2- 1 074 653
- WO-A1-03/023108
- WO-A2-2006/076490
- JP-A- S6 432 995
- US-B2- 6 579 396
- Anonymous: "SABIC's High-Performance ULTEM(TM) Fiber Helps National Nonwovens Create First Fire Blocker Suitable for All Aircraft Seating Dress Covers", , 2 October 2012 (2012-10-02), pages 1-2, XP055141761, Retrieved from the Internet: URL:http://www.sabic-ip.com/gep/en/NewsRoo m/PressReleaseDetail/october_02_2012_sabic shighperformance.html [retrieved on 2014-09-22]
- Anonymous: "Innovative Aerospace Solutions: Ultra-ProTechtor(TM)", , 2012, pages 1-1, XP55141840, Easthampton , MA 01027 USA Retrieved from the Internet: URL:nationalnonwovens.com/pdf/TechNews-Spr ing2012-pg1.pdf [retrieved on 2014-09-22]
- Anonymous: "National Nonwovens Introduces Ultra-ProTechtor(TM) Fire-Blocker", , 7 March 2012 (2012-03-07), pages 1-2, XP55141846, Easthampton, MA 01027 USA Retrieved from the Internet: URL:http://www.nationalnonwovens.com/pdf/P ress%20Release%20-%20Ultra-ProTechtor.pdf [retrieved on 2014-09-22]
- John Reinhardt, Patricia Cahill: "Federal Aviation Administration Development of a New Flammability Test for Aircraft Ducting & Wiring", , 3 March 2010 (2010-03-03), pages 1-24, XP55141886, Retrieved from the Internet: URL:https://www.fire.tc.faa.gov/2010Confer ence/files/Material_Test_Method_Developmen t/ReinhardtDucting/ReinhardtDuctingWiringU pdate.pdf [retrieved on 2014-09-22]
- Anonymous: "Federal Aviation Subject: FLAMMABILITY REQUIREMENTS FOR AIRCRAFT SEAT CUSHIONS", , 17 September 1986 (1986-09-17), pages 1-11, XP55141898, Retrieved from the Internet: URL:http://www.faa.gov/documentLibrary/med ia/Advisory_Circular/AC%2025.853-1.pdf [retrieved on 2014-09-22]

## Description

### FIELD

The present invention generally relates to nonwoven structures and composites comprising such nonwoven structures, particularly structures incorporating foam, and methods of making and use thereof.

### BACKGROUND

Nonwoven structures are typically made from fibers that are assembled together without weaving or knitting the individual fibers together. In some cases, the nonwoven structure may resemble a fabric material. The nonwoven structures may be formed by entangling the individual fibers together mechanically, thermally, chemically. For example, the nonwoven structure may be fabricated using needlepunching or needlefelting technologies, where needles are used to mechanically entangle individual fibers together to form the nonwoven structure. Other technologies for forming nonwoven structures include thermal bonding, hydroentaglement, ultrasonic bonding, or chemical bonding. Such nonwoven structures may be used in a wide range of applications, for instance, for apparel, home furnishings, health care, engineering, industrial, or consumer goods. WO03023108 (A1) discloses a nonwoven highloft flame barrier for use in mattress, upholstered furniture and other end use applications where a highloft nonwoven material is desired for flame barrier purposes. A preferred nonwoven highloft flame barrier of the invention comprises a blend of fibers, that are inherently fire resistant and essentially nonshrinking to direct flame, with melamine fibers being preferred either alone or in conjunction with, for example, viscose rayon based fibers, fibers extruded from polymers made with halogenated monomers and preferably low-melt binder fibers, which are thermally activated in a highloft manufacturing process.
WO2006076490 (A2) relates to slickened or siliconized flame resistant fiber blends that are for use in mattresses, boxsprings, upholstered furniture, fiber-filled bed clothing, transportation seating or any end use application where soft materials are desired for flame resistant (FR) purposes. Some of the fibers in the blend are slickened. The FR fibers incorporated into these blends include both char forming FR fibers and oxygen depleting FR fibers.

### SUMMARY

The present invention is defined in the claims and generally relates to nonwoven structures and composites comprising such nonwoven structures, particularly structures incorporating foam layer, and methods of making thereof. The invention is generally directed to composites comprising a nonwoven structure immobilized to foam, e.g., using adhesive, needling, or other techniques. The nonwoven structure comprises the fibers disclosed in the claims. In certain embodiments, the composite may be substantially thermally insulating and/or acoustic insulating. Other aspects of the present invention are generally directed to methods for making such composites.

Other advantages and novel features of the present invention will become apparent from the following detailed description of various embodiments of the invention when considered in conjunction with the accompanying figures.

### BRIEF DESCRIPTION OF THE DRAWINGS

Embodiments of the present invention will be described by way of example with reference to the accompanying figures, which are schematic and are not intended to be drawn to scale. In the figures, each identical or nearly identical component illustrated is typically represented by a single numeral. In the figures:
Fig. 1 illustrates a composite in accordance with one embodiment of the invention;
Fig. 2 illustrates a composite in accordance with another embodiment of the invention;
Fig. 3 illustrates a composite in accordance with yet another embodiment of the invention;
Fig. 4 illustrates a composite in accordance with still another embodiment of the invention; and
Fig. 5 illustrates a composite in accordance with another embodiment of the invention.

### DETAILED DESCRIPTION

The present invention is generally directed to composites comprising a nonwoven structure and a foam as defined in claim 1. The foam is immobilized to the nonwoven structure. Optionally, other materials may also be present in the composite, for example, more than one nonwoven structure or additional foam layers, other layers such as backing layers or protective layers. The composite may, in some cases, be formed or molded into a desired shape or configuration, for example, as a component within a car, trucks, trains, ships, boats, aircraft, or other vehicle, as part of a floor covering, as a construction material.

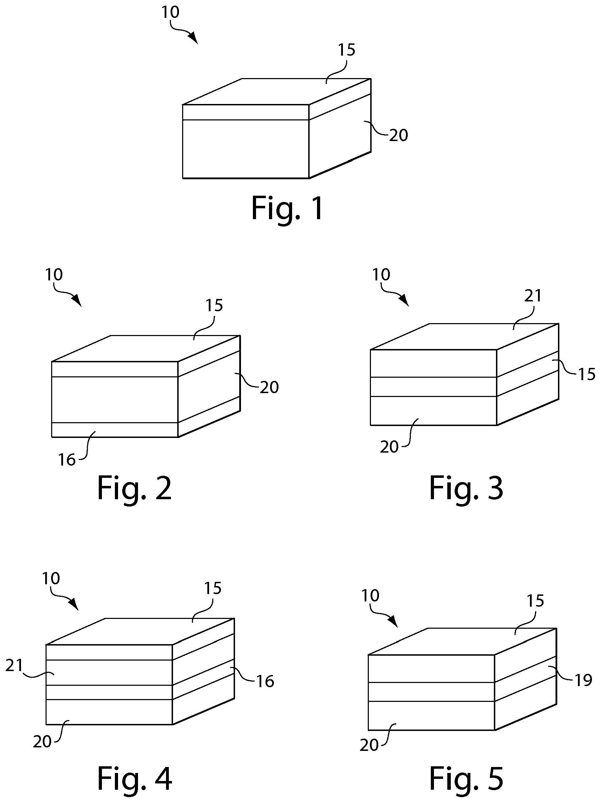

One embodiment is now described with reference to Fig. 1, although it should be understood that other configurations are also possible in other embodiments of the invention, e.g., as discussed in detail below. In Fig. 1, composite 10 includes nonwoven structure 15 and foam 20. The nonwoven structure comprises first fibers comprising polyacrylonitrile and second fibers comprising polyetherimide, and may be formed using any suitable technique known in the art or discussed herein. For instance, the nonwoven structure can be formed using techniques such as needlepunching or needlefelting, thermal bonding, hydroentaglement, ultrasonic bonding, or chemical bonding. In addition, the nonwoven structure can comprise any number of fiber types that are entangled together (e.g., without weaving) to form the nonwoven structure. For instance, the nonwoven structure may comprise two or more types of fibers, and the fibers can each independently be of any suitable composition, length, mass density.

Also shown in Fig. 1 is foam 20. In Fig. 1, foam 20 is immobilized to nonwoven structure 15 to form composite 10, although in other embodiments, other materials may be present between foam 20 and nonwoven structure 15. In this figure, foam 20 may be immobilized to or by nonwoven structure 15 using any suitable technique, e.g., using an adhesive, by needling foam 20 and nonwoven structure 15 together. Foam 20 may be of any suitable shape or size, and may vary based on the application. For example, in certain applications, foam 20 is a foam that is substantially flame resistant and/or acoustically insulating. Examples of suitable foams include polyurethane foams, polyvinylidene fluoride foams, polyimide foams, polyetherimide foams. The foams can also be open-celled or close-celled, and may be of any suitable cell size.

The composite also may have any suitable shape or size. In some cases, the composite is planar as is shown in Fig. 1, although this is not necessarily a requirement for all embodiments. For example, the composite may be shaped or molded to have different configurations, depending on the application. In addition, the thicknesses of the nonwoven structure and the foam within the composite may be the same or different. For example, the foam may be thicker than the nonwoven structure. In some embodiments, the composite is constructed and arranged to be substantially nonflammable, or to resist flame propagation, e.g., as discussed herein. For example, the composite may be formed of heat-resistant materials, and/or a material of the composite may have a structure or porosity that resists flame propagation. As an example, the nonwoven structure may be formed into a structure that allows some gases to pass through the nonwoven structure, but not larger amounts that could potentially facilitate burning or combustion. Surprisingly, such structures, despite having some permeability, offer fire or flame resistance for certain applications.

As mentioned the nonwoven structure of the invention comprises first fibers comprising polyacrylonitrile and second fibers comprising polyetherimide. The nonwoven structure can comprise any number of fiber types that are entangled together to form the nonwoven structure. For instance, the nonwoven structure includes two, three, or more types of fibers, e.g., having different compositions, lengths, diameters, densities. Examples of fibers that can be used in the nonwoven structure include cotton or other plant fibers, wood fibers, animal fibers, glass fibers, fiberglass, carbon fibers, mineral fibers, metallic fibers, or synthetic or polymeric fibers. Examples of polymers that may be used in the polymeric fibers in addition to polyacrylonitrile and second fibers comprising polyetherimide (e.g., Ultem® from SABIC) include polyamides such as nylons, novoloid (e.g., Kynol® from American Kynol, novolacs, phenolic fibers, melamines, polyesters, polypropylenes, polyethylenes, polystyrenes, polyacrylic acids, polyimides, , polyamideimides, polymethyl methacrylates, polyphenelene sulfides, aramids (e.g., meta- or para-aramids, e.g., Kevlar® from Dupont), polybenzimidazoles, polyphenylenebenzobizoxazoles, aromatic polyketones (e.g., polyetheretherketones, polyetherketones), polyvinyl acetates, polysulfones, polyethersulfones, polyurethanes, polyisobutylenes, liquid crystal polymers, poly(paraphenylene terephthalamide). A polymeric fiber may comprise one or more than one of these polymers, and/or other polymers, or a polymeric fiber can be formed from or consist essentially of one type of polymer.

A nonwoven structure may comprise any number of fiber types. The nonwoven structure includes two, three, or more fiber types having different compositions, lengths, diameters, densities. The nonwoven structure includes first fibers comprising polyacrylonitrile and second fibers comprising polyetherimide.

In addition, in some embodiments, the nonwoven structure comprises fibers having one or more "weights," or more accurately, mass densities. For example, the nonwoven structure may comprise fibers having an average linear mass density of 2.2 tex (20 Denier) or less, 1.98 tex (18 Denier) or less, 1.76 tex (16 Denier) or less, 1.65 tex (15 Denier) or less, 1.54 tex (14 Denier) or less, 1.43 tex (13 Denier) or less, 1.32 tex (12 Denier) or less, 1.21 tex (11 Denier) or less, 1.1 tex (10 Denier) or less, 0.99 tex (9 Denier) or less, 0.88 tex (8 Denier) or less, 0.77 tex (7 Denier) or less, 0.66 tex (6 Denier) or less, 0.55 tex (5 Denier) or less, 0.44 tex (4 Denier) or less, 0.33 tex (3 Denier) or less, 0.275 tex (2.5 Denier) or less, 0.22 tex (2 Denier) or less, 0.165 tex (1.5 Denier) or less, 0.11 tex (1 Denier) or less, 0.055 tex (0.5 Denier) or less, 0.033 tex (0.3 Denier) or less, 0.022 tex (0.2 Denier) or less, 0.011 tex (0.1 Denier) or less, or 0.0055 tex (0.05 Denier) or less. (0.11 tex (1 Denier) is the mass in grams for 9,000 linear meters of fiber; expressed as a ratio, this becomes an average linear mass density of the fiber.) In some cases, the nonwoven structure comprises fibers having average linear mass densities at least 0.0055 tex (0.05 Denier), at least 0.011 tex (0.1 Denier), at least 0.022 (0.2 Denier), at least 0.033 tex (0.3 Denier), at least 0.055 tex (0.5 Denier), of at least 0.11 tex (1 Denier), at least 0.165 tex (1.5 Denier), at least 0.22 tex (2 Denier), at least 0.275 tex (2.5 Denier), at least 0.33 tex (3 Denier), at least 0.44 tex (4 Denier), at least 0.55 tex (5 Denier), at least 0.66 tex (6 Denier), at least 0.77 tex (7 Denier), at least 0.88 tex (8 Denier), at least 0.99 tex (9 Denier), at least 1.1 tex (10 Denier), at least 1.21 tex (11 Denier), at least 1.32 tex (12 Denier), at least 1.43 tex (13 Denier), at least 1.54 tex (14 Denier), at least 1.65 tex (15 Denier), at least 1.76 tex (16 Denier), 1.98 tex (18 Denier). Suitable combinations of any of these are also contemplated in other embodiments of the invention, e.g., the nonwoven structure may comprise first fibers having an average linear mass density of greater than 0.22 tex (2 Denier) and less than 0.66 tex (6 Denier). In addition, the densities may be substantially the same, or there may be a range of densities present, for fibers with substantially the same composition within the nonwoven structure.

More than one type of fiber is present in the nonwoven material, and the fibers can independently have the same or different average linear mass densities, including any of the values described herein. As examples, the nonwoven material may comprise first fibers having an average linear mass density of 0.88 tex (8 Denier) and second fibers having an average linear mass density of 0.44 tex (4 Denier), first fibers having an average linear mass density of 0.88 tex (8 Denier) and second fibers having an average linear mass density of 0.22 tex (2 Denier), first fibers having an average linear mass density of 1.76 tex (16 Denier) and second fibers having an average linear mass density of 0.88 tex (8 Denier), first fibers having an average linear mass density of 0.22 tex (2 Denier) and second fibers having an average linear mass density of 0.165 tex (1.5 Denier), first fibers having an average linear mass density of between 0.22 tex (2 Denier) and 0.66 tex (6 Denier) and second fibers having an average linear mass density of between 1.32 tex (12 Denier) and 2.2 tex (20 Denier).

The fibers within the nonwoven structure may also have any suitable diameter (or smallest cross-sectional dimension for fibers that are not in the form of circular cylinders, e.g., for 4DG-shaped fibers). As examples, the nonwoven structure can comprise fibers having an average diameter of less than 500 micrometers, less than 400 micrometers, less than 300 micrometers, less than 200 micrometers, less than 100 micrometers, less than 90 micrometers, less than 80 micrometers, less than 70 micrometers, less than 60 micrometers, less than 50 micrometers, less than 40 micrometers, less than 30 micrometers, less than 25 micrometers, less than 20 micrometers, less than 15 micrometers, less than 10 micrometers, less than 5 micrometers, less than 1 micrometer, less than 0.5 micrometers, less than 0.3 micrometers, less than 0.1 micrometers, less than 0.05 micrometers. In some embodiments, the fibers may have an average diameter of at least 0.05 micrometers, at least 0.1 micrometers, at least 0.3 micrometers, at least 0.5 micrometers, at least 1 micrometer, at least 5 micrometers, at least 10 micrometers, at least 15 micrometers, at least 20 micrometers, at least 25 micrometers, at least 30 micrometers, at least 40 micrometers, at least 50 micrometers, at least 60 micrometers, at least 70 micrometers, at least 80 micrometers, at least 90 micrometers, at least 100 micrometers, at least 200 micrometers, at least 300 micrometers, at least 400 micrometers. Suitable combinations of any of these are also contemplated in some embodiments of the invention, e.g., one of the fibers may have a diameter of between 50 micrometers and 100 micrometers. If more than one type of fiber is present in the nonwoven material, the fibers independently can have the same or different diameters. In addition, the diameters may be substantially the same, or there may be a range of diameters for fibers with substantially the same composition within the nonwoven structure. Also, fibers having different diameters within a nonwoven structure can independently have the same or different compositions.

The fibers within the nonwoven structure can also have any suitable length, and the lengths of the fibers may be substantially the same, or there may be a range of lengths present within the nonwoven structure for fibers with substantially the same composition. For example, the fibers may have a length of 38.1 cm (15 inches) or less, 30.48 cm (12 inches) or less, 27.94 cm (11 inches) or less, 25.4 cm (10 inches) or less, 22.84 cm (9 inches) or less, 20.32 cm (8 inches) or less, 17.78 cm (7 inches) or less, 15.24 cm (6 inches) or less, 12.7 cm (5 inches) or less, 10.16 cm (4 inches) or less, 7.62 cm (3 inches) or less, 5.08 cm (2 inches) or less, or 2.54 cm (1 inch) or less, depending on the embodiment. (1 inch is 25.4 mm.) In some embodiments, the fibers may also have a length of at least 1 inch, at least 5.08 cm (2 inches), at least 7.62 cm (3 inches), at least 10.16 cm (4 inches), at least 12.7 cm (5 inches), at least 15.24 cm (6 inches), at least 17.78 cm (7 inches), at least 20.32 cm (8 inches), at least 22.86 cm (9 inches), at least 25.4 cm (10 inches), at least 27.94 cm (11 inches), at least 30.48 cm (12 inches), etc., and/or combinations of any of these (e.g., the fibers within the nonwoven structure may have a length of between 7.62 cm (3 inches) and 20.32 cm (8 inches). More than one fiber type is present in the nonwoven material, and the fiber types can independently have the same or different lengths. Fibers having different lengths within a nonwoven structure can also independently have the same or different compositions. In addition, the lengths may be substantially the same, or a range of lengths may be present for fiber types with substantially the same composition within the nonwoven structure.

More than one fiber type is present within a nonwoven structure, and the fiber types may be present in any suitable ratio. This can be determined, for example, using mass ratios. For example, when two types of fibers are present within a nonwoven structure, the mass ratio of first fibers to second fibers within the nonwoven structure can be between 50:1 and 1:50, between 40:1 and 1:40, between 30:1 and 1:30, between 20:1 and 1:20, between 10:1 and 1:10, between 5:1 and 1:5. As additional non-limiting examples, the mass ratio of the first fibers to the second fibers within the nonwoven structure can be between 50:1 and 1:1, between 40:1 and 1:1, between 30:1 and 1:1, between 20:1 and 1:1, between 10:1 and 1:1, between 5:1 and 1:1, between 2:1 and 1:1.

In certain embodiments, the first fibers comprise at least 5% (by mass) of all of the fibers within the nonwoven structure with the balance being the second fiber (and/or other fibers, if present). In certain instances, the first fibers comprise at least 10%, at least 15%, at least 20%, at least 25%, at least 30%, at least 35%, at least 40%, at least 45%, at least 50%, at least 55%, at least 60%, at least 65%, at least 70%, at least 75%, at least 80%, at least 85%, at least 90%, or at least 95% of all of the fibers within the nonwoven structure. In some cases, the first fibers comprise no more than 95%, no more than 90%, no more than 85%, no more than 80%, no more than 75%, no more than 70%, no more than 65%, no more than 60%, no more than 55%, no more than 50%, no more than 45%, no more than 40%, no more than 35%, no more than 30%, no more than 25%, no more than 20%, no more than 15%, no more than 10%, or no more than 5% of all of the fibers within the nonwoven structure. Suitable combinations of any of these are also contemplated in other embodiments of the invention. For instance, the first fibers can comprise at least 10% and no more than 90% of all of the fibers within the nonwoven structure. In addition, it should be understood that the invention is not limited to only two types of fibers within a nonwoven structure, and three, four, five, or more types of fibers may be present within the nonwoven structure in certain embodiments.

The nonwoven structure, when formed, may have any suitable thickness, weight, or density. For example, the thickness of the nonwoven structure, or the smallest dimension of the nonwoven structure, may be 0.254 cm (0.1 inches), 0.635 cm (0.25 inches), 1.27 cm (0.5 inches), 1.905 cm (0.75 inches), 2.54 cm (1 inch), 3.175 cm (1.25 inches), 3.81 cm (1.5 inches), 4.445 cm (1.75 inches), 5.08 cm (2 inches), 5.72 cm (2.25 inches), 6.35 cm (2.5 inches), 6.99 cm (2.75 inches), 7.62 cm (3 inches), 8.89 cm (3.5 inches), 10.16 cm (4 inches), 11.43 cm (4.5 inches), 12.7 cm (5 inches), 15.24 cm (6 inches), 17.78 cm (7 inches), 20.32 cm (8 inches), 22.86 cm (9 inches), 25.4 cm (10 inches), 30.48 cm (12 inches). As other examples, the nonwoven structure can have a density of 169.5 g/m² (5 oz/yd²) or more, 339 g/m² (10 oz/yd²) or more, 508.5 g/m² (15 oz/yd²) or more, 678 g/m² (20 oz/yd²) or more, 847.5 g/m² (25 oz/yd²) or more, 1017 g/m² (30 oz/yd²) or more, 1356 g/m² (40 oz/yd²) or more, 1695 g/m² (50 oz/yd²) or more, 2034 g/m² (60 oz/yd²) or more, 2373 g/m² (70 oz/yd²) or more, 2712 g/m² (80 oz/yd²) or more, 3051 g/m² (90 oz/yd²) or more, 3390 g/m² (100 oz/yd²) or more, 3729 g/m² (110 oz/yd²) or more, 4068 g/m² (120 oz/yd²) or more, 4237.5 g/m² (125 oz/yd²) or more, 5085 g/m² (150 oz/yd²) or more, 5932.5 g/m² (175 oz/yd²) or more, 6780 g/m² (200 oz/yd²) or more, 7627.5 g/m² (225 oz/yd²) or more, 8475 g/m² (250 oz/yd²) or more, 9322.5 g/m² (275 oz/yd²) or more, 10170 g/m² (300 oz/yd²) or more, 11865 g/m² (350 oz/yd²) or more, 13560 g/m² (400 oz/yd²) or more, 15255 g/m² (450 oz/yd²) or more, 16950 g/m² (500 oz/yd²) or more, 18645 (550 oz/yd²) or more, 20340 g/m² (600 oz/yd²) or more, 22035 g/m² (650 oz/yd²) or more, 23730 g/m² (700 oz/yd²) or more, 25425 g/m² (750 oz/yd²) or more, 27120 g/m² (800 oz/yd²) or more, 28815 g/m² (850 oz/yd²) or more, 30510 g/m² (900 oz/yd²) or more, 33900 g/m² (1,000 oz/yd²) or more (1 oz is 28.3495 g and 1 yd is 0.9144 m).

The nonwoven structure, in some embodiments, has a relatively low permeability to gases such as air or other types of gases. Having relatively low permeability to gases can allow the nonwoven structure to be relatively flame resistant, and/or to act as acoustic insulation, at least in some cases. For instance, for relatively low permeabilities, the nonwoven structure may have fibers that are relatively tightly arranged, resulting in relatively small pores or spaces between the fibers that would allow gases such as air to pass, and/or the fibers can be relatively large, resulting in spaces between the fibers that are relatively small. In addition, the nonwoven structure can also be relatively thick in some embodiments to slow the passage of gases through the structure. Examples of suitable thicknesses include those previously described.

Accordingly, in one set of embodiments, the nonwoven structure is constructed and arranged, through any suitable combination of thickness, fiber dimensions, fiber materials, arrangement of fibers, etc. within the nonwoven structure, such that, for a pressure differential of 1.27 cm (0.5 inches) of water (1 inH₂O is 248.84 Pa), the permeability of air through the nonwoven structure is no more than 508 l/ s / m² (100 ft³/min/ft²) at standard pressure and temperature, and in some cases, no more than 381 l/ s / m² (75 ft³/min/ft²), no more than 254 l/ s / m² (50 ft³/min/ft²), no more than 127 l/ s / m² (25 ft³/min/ft²), no more than 101.6 l/ s / m² (20 ft³/min/ft²), no more than 76.2 l/ s / m² (15 ft³/min/ft²), no more than 50.8 l/ s / m² (10 ft³/min/ft²), no more than 25.4 l/ s / m² (5 ft³/min/ft²), no more than 15.24 l/ s / m² (3 ft³/min/ft²), no more than 10.16 l/ s / m² (2 ft³/min/ft²), or no more than 5.08 l/ s / m² (1 ft³/min/ft²). However, in some embodiments, some gas permeability within the nonwoven structure is desired. For instance, the permeability of air through the nonwoven structure can be at least 2.54 l/ s / m² (0.5 ft³/min/ft²) under the above-described conditions, and in some cases, at least 5.08 l/ s / m² (5.08 l/ s / m² (1 ft³/min/ft²), at least 10.16 l/ s / m² (2 ft³/min/ft²), at least 15.24 1/ s / m² (3 ft³/min/ft²), at least 25.4 l/ s / m² (5 ft³/min/ft²), at least 50.8 l/ s / m² (10 ft³/min/ft²), at least 76.2 l/ s / m² (15 ft³/min/ft²), at least 101.6 l/ s / m² (20 ft³/min/ft²), at least 127 l/ s / m² (25 ft³/min/ft²), at least 127 l/ s / m² (25 ft³/min/ft²), at least 254 l/ s / m² (50 ft³/min/ft²), or at least 381 l/ s / m² (75 ft³/min/ft²), Combinations of any of the above permeabilities are also possible in certain cases, e.g., a permeability of greater than 5.08 l/ s / m² (1 ft³/min/ft²) and less than 50.8 l/ s / m² (10 ft³/min/ft²). In addition, in some embodiments, the nonwoven structure can also contain compounds that are able to alter its permeability, for example, certain inorganic compounds such as colloidal silica.

Gases may flow through spaces between the fibers in the nonwoven structure, and the spaces may be characterized as having an equivalent diameter or porosity that gases are able to flow through. The porosity within the nonwoven structure may be determined by any suitable technique known to those of ordinary skill in the art, e.g., through microscopy or electron microscopy, capillary flow porometry. For example, in one set of embodiments, the nonwoven structure has an number average porosity (with pore size being the smallest cross-sectional dimension of the pore) determined by microscopy or a mean flow pore size determined by porometry of less than 1 cm, less than 5 mm, less than 3 mm, less than 1 mm, less than 0.5 mm, or less than 0.3 mm. The average porosity may also be less than 100 micrometers, less than 90 micrometers, less than 80 micrometers, less than 70 micrometers, less than 60 micrometers, less than 50 micrometers, less than 40 micrometers, less than 30 micrometers, less than 25 micrometers, less than 20 micrometers, less than 15 micrometers, less than 10 micrometers, less than 5 micrometers, less than 1 micrometer. The nonwoven structure can also have a porosity of at least 1 micrometer, at least 5 micrometers, at least 10 micrometers, at least 15 micrometers, at least 20 micrometers, at least 25 micrometers, at least 30 micrometers, at least 40 micrometers, at least 50 micrometers, at least 60 micrometers, at least 70 micrometers, at least 80 micrometers, at least 90 micrometers, at least 100 micrometers, at least 300 micrometers, at least 500 micrometers, at least micrometers, at least 1 mm, at least 3 mm. Combinations of any of these are also possible; for example, the nonwoven structure may have a porosity between 30 micrometers and 1 mm in one embodiment.

In another set of embodiments, the nonwoven structure may have a structure or a porosity such that heat is transmitted through the nonwoven structure preferentially via conduction through the fibers of the nonwoven structure, rather than via convection of gases through the pores of the nonwoven structure. Thus, for example, the nonwoven structure can have structure such that heat is preferentially transmitted through the nonwoven structure via conduction over convection by a factor of at least 2, at least 5, at least 10, at least 30, at least 50, at least 75, at least 100, at least 300, at least 500, at least 750, at least 1,000.

For example, in one set of embodiments, the fibers or polymers can be formed of materials that have relatively low heat conductivity. For example, the article may comprise a polymer having a thermal conductivity of no more than 1.2 W/m K, no more than 1 W/m K, no more than 0.8 W/m K, no more than 0.7 W/m K, no more than 0.6 W/m K, no more than 0.5 W/m K, no more than 0.4 W/m K, no more than 0.3 W/m K, no more than 0.25 W/m K, no more than 0.2 W/m K, no more than 0.15 W/m K, no more than 0.1 W/m K, no more than 0.08 W/m K, no more than 0.06 W/m K, no more than 0.05 W/m K, no more than 0.04 W/m K, no more than 0.03 W/m K, or no more than 0.02 W/m K.

In addition, in certain cases, the nonwoven structure may be treated, e.g., chemically. For instance, in one set of embodiments, the nonwoven structure may be treated to reduce heat transfer through the nonwoven structure, and/or to inhibit or resist the spread of fire through the nonwoven structure. For example, any of a variety of flame retardants can be used to treat the nonwoven structure, and the flame retardants can be added before and/or after the nonwoven structure is formed. The flame retardant, for instance, may be applied to the fibers before they are assembled to form the nonwoven structure, or the nonwoven structure, after formation, can be exposed to flame retardant by any suitable technique. In some embodiments, the flame retardant may be sprayed onto the nonwoven structure, the nonwoven structure may be dipped or immersed in flame retardant (e.g., contained within a suitable container), the flame retardant may be painted onto the nonwoven structure, the flame retardant may be electrostatically bonded to the nonwoven structure. The fibers, in some cases, can become partially or fully impregnated with the flame retardant, and/or the flame retardant may form a shell or coating around one or more of the fibers within the nonwoven structure. In some instances, the fibers are saturated in flame retardant.

Examples of flame retardants include, but are not limited to, minerals such as aluminum hydroxide, aluminum oxide, aluminum trihydrate, magnesium carbonate hydroxide, magnesium hydroxide, huntite, hydromagnesite, hydrates, red phosphorus, boron compounds such as zinc borate or sodium borate, zinc carbonate, antimony trioxide, antimony pentoxide, sodium antimonate, sodium carbonate, antimony carbonate, aluminum carbonate, etc.; organochlorines such as chlorendic acid derivatives and chlorinated paraffins; organobromines such as polybrominated diphenylethers, decabromodiphenyl ether, decabromodiphenyl ethane, hexabromobutene, dibromoethyl dibromocyclohexane, hexabromocyclododecane, diboromoneopentyl glycol, tribromoneopentyl alcohol, brominated aliphatic polyol, polyethertriol, octabromodiphenyl ether, pentabromodiphenyl ether, fully brominated diphenoxy benzene, decabromodiphenyl ether, octabromodiphenylether, pentabromodiphenylether, (bis-pentabromophenyl)ethane, brominated trimethylphenylindan, tetrabromobisphenol A, bis(tribromophenoxy)ethane, polydibromophenylene oxide, tetrabromophthalic anhydride, 1,2-bis(tetrabromophthalimide)ethane, tetrabromophthalate diols, tetrabromophthalate esters, tetrabromobisphenol A, polydibromophenylene oxide, brominated polystyrene, poly(pentabromobenzyl)acrylate, polymeric brominated compounds such as brominated polystyrenes, brominated carbonate oligomers, brominated epoxy oligomers, tetrabromophthalic anyhydride, tetrabromobisphenol A, hexabromocyclododecane); sulfamic acid or sulfamates; sulfamides; or organophosphorous or organophosphate compounds such as tris(2,3-dibromopropyl) phosphate, triphenyl phosphate, tris-dichloropropyl phosphate, cresyldiphenyl phosphate, resorcinol bis(diphenylphosphate), bisphenol A bis(diphenyl phosphate), melamine phosphate, tri-o-cresyl phosphate, dimethyl methylphosphonate, phosphinates, tri-m-cresyl phosphate, tris(2-chloropropyl) phosphate, tris-(1.3-dichloro-2-propyl) phosphate, tris(chloroethyl) phosphate, trisdichloropropylphosphate, tri-p-cresyl phosphate, trischloropropylphosphate, tris(chloroisopropyl)phosphate, tri(isopropylphenyl)phosphate, tetrakis(2-chloroethyl) dichloroisopentyldiphosphate, dimethyl methylphosphonate, 9,10-dihydro-9-oxa-10-phosphaphenanthrene-10-oxide, 6-(2,5-dihydroxyphenyl)-6H-dibenz[c,e][1,2]oxaphosphorine-6-oxide, tetraphenyl resorcinol bis(diphenylphosphate). In addition, combinations of any of these and/or other flame retardants can also be used in other embodiments. For example, the flame retardant that is applied may comprise one, two, three, or more of any of these, and/or other flame retardants.

In addition, the flame retardant may be substantially hydrophobic in some embodiments. For instance, the flame retardant can have a water contact angle of greater than 75°, greater than 90°, greater than 100°, greater than 120°, greater than 135°, etc. However, in other embodiments, the flame retardant is not necessarily substantially hydrophobic, or the flame retardant may have water contact angles less than any of these angles.

Accordingly, in one set of embodiments, the nonwoven structure may be substantially resistant to flames or fires. This may be achieved through a combination of any one or more of the selection of materials forming the fibers of the nonwoven structure, the thickness of the nonwoven structure, the arrangement of fibers within the nonwoven structure to control the porosity or the permeability of gases that can pass through the nonwoven structure, the addition of one or more flame retardants.

In another set of embodiments, the nonwoven structure (and/or the foam layer(s), as discussed below) may be treated with an antimicrobial agent. Any of a wide variety of antimicrobial agents may be used, including antibacterials, antifungals, antiseptics, or the like. The antimicrobial agents can be added to the nonwoven structure before and/or after the nonwoven structure is formed, or the nonwoven structure, after formation, may be exposed to antimicrobials by any suitable technique, such as spraying or ipping.

Examples of antimicrobial agents include organic acids such as lactic acid, citric acid, acetic acid, and their salts; metals such as copper or silver (e.g., which may be impregnated within polymers such as those contained within the composite); Silpure (which also contains silver) or Ultra-Fresh DM-50 (Thompson Research); or oils such as cinnamon oil, clove oil, eucalyptus oil, garlic oil, oregano oil, lavender oil, leleshwa oil, lemon oil, lemon myrtle oil, mint oil, neem oil, black cumin oil, onion oil, peppermint oil, sandalwood oil, ironwort, tea tree oil, or thyme oil. Examples of antibacterials and antiseptics include alcohols; quaternary ammonium compounds such as benzalkonium chloride, cetyl trimethylammonium bromide, cetylpyridinium chloride, benzethonium chloride, chlorhexidine, octenidine; boric acid; aldehydes such as formaldehyde and glutaraldehyde; or phenolics such as phenol, o-phenylphenol, chloroxylenol, hexachlorophene, thymol. Examples of antifungals include tea tree oil, cinnamaldehyde, cinnamon essential oil, jojoba oil, neem oil, rosemary oil, monocerin.

In another set of embodiments, the nonwoven structure (and/or a foam, as discussed below) is hydrophobic, or is treated to render it hydrophobic. For example, the nonwoven structure may have a water contact angle of greater than 75°, greater than 90°, greater than 100°, greater than 120°, greater than 135°, etc. Examples of suitable treatments include, but are not limited to, fluorinated hydrocarbons (e.g., having 5, 6, 7, or 8 carbons) such as fluoroalkyl esters, perfluoroacrylates, trifluorinated hydrocarbons, tetrafluorinated hydrocarbons, fluorinated acrylates, perfluoroacrylates, silicones such as reactive organosilicones, polysiloxanes such as polydimethylsiloxanes or polymethylhydrogensiloxanes, or the like. However, in other embodiments, the nonwoven structure and/or foam is not necessarily substantially hydrophobic, and/or the nonwoven structure and/or foam may have water contact angles less than any of these angles. In one set of embodiments, the nonwoven structure and/or foam is hydrophobic or water-repellent, and/or is treated such that it absorbs less than 4% water by weight after 96 hours, e.g., as discussed in the ASTM D2842 water absorption test (Standard Test Method for Water Absorption of Rigid Cellular Plastics.

As previously discussed, the nonwoven structure comprises a foam, in certain embodiments of the invention. Any suitable foam can be used, including open-cell foams and closed-cell foams, as well as combinations thereof. If the article comprises a plurality of closed cells, the cells may have substantially the same or substantially different volumes, shapes, or dimensions. The foam may also have any average cell size, which can be readily determined using techniques known to those of ordinary skill in the art, e.g., such as microscopic techniques. For example, the foam can have a number average cell size (with cell size being the smallest cross-sectional dimension of the cell) determined by microscopy or a mean flow pore size determined by porometry of less than 1 cm, less than 5 mm, less than 3 mm, less than 1 mm, less than 0.5 mm, less than 0.3 mm, or less than 0.2 mm. The average cell size may also be less than 100 micrometers, less than 90 micrometers, less than 80 micrometers, less than 70 micrometers, less than 60 micrometers, less than 50 micrometers, less than 40 micrometers, less than 30 micrometers, less than 20 micrometers, less than 10 micrometres. The foam may also, in certain instances, have an average cell size of at least 10 micrometers, at least 20 micrometers, at least 30 micrometers, at least 40 micrometers, at least 50 micrometers, at least 60 micrometers, at least 70 micrometers, at least 80 micrometers, at least 90 micrometers, at least 100 micrometers, at least 200 micrometers, at least 300 micrometers, at least 500 micrometers, at least 1 mm, at least 3 mm, at least 5 mm, at least 1 cm. The foam can also have an average cell size that falls between any two of the above stated ranges, e.g., the foam may have an average cell size of between 1 mm and 5 mm. Techniques known to those of ordinary skill in the art, such as microscopy or electron microscopy, capillary flow porometry, etc. may be used to determine the average cell size.

The foam may be substantially flame resistant and/or the foam may be acoustic insulating, e.g., due to the presence of cells within the foam, in some cases. For example, the foam can have relatively low permeability to gases such as air or other types of gases. The foam can also provide structural support to the composite in certain embodiments. For instance, the foam may provide rigidity or structural stability to the nonwoven structure such that the resulting composite has a specific, defined shape, e.g., that the composite tries to return to when perturbed. (In contrast, a loose piece of fabric lacks such a specific defined shape, and can adopt a variety of stable arrangements when perturbed.) In some cases, the foam cannot be permanently deformed by an unassisted human being of average strength, or the foam cannot be bent by an unassisted human being of average strength. The foam may also be self-supporting or load-bearing, as discussed below. However, in other cases, the foam is flexible or readily deformable or bent by an unassisted human being of average strength, or the foam may not be load-bearing (for example, the foam may be incapable of bearing a load of the same weight of the foam without being bent or otherwise deformed). In addition, in certain embodiments, the foam can comprise or contain one or more flame retardants, including any of those described herein.

Examples of foams that can be used include, but are not limited to, polymeric foams such as Styrofoam, polyurethane foams, polyvinylidene fluoride foams, polyimide foams, latex foams, polyetherimide foams, melamine foams. The foam may comprise only one of these polymers, or in some instances, the foam comprises more than one of these polymers. The foam can also be a syntactic foam in certain cases, and/or the foam may comprise other materials, such as cenospheres, glass microspheres, carbon microspheres, polymeric microspheres, etc. The microspheres, if present, can be solid or hollow.

The foam can have any suitable density. For example, the density of the foam may be at least 0.001 g/cm³, at least 0.002 g/cm³, at least 0.004 g/cm³, at least 0.006 g/cm³, at least 0.008 g/cm³, at least 0.01 g/cm³, at least 0.02 g/cm³, at least 0.4 g/cm³, at least 0.06 g/cm³, at least 0.08 g/cm³, at least 0.1 g/cm³, at least 0.2 g/cm³, at least 0.3 g/cm³, at least 0.4 g/cm³, at least 0.5 g/cm³, at least 0.6 g/cm³, at least 0.7 g/cm³, at least 0.8 g/cm³, at least 0.9 g/cm³, at least 1 g/cm³, at least 2 g/cm³, at least 3 g/cm³, etc. In some cases, the density of the foam may be no more than 1 g/cm³, no more than 0.9 g/cm³, no more than 0.8 g/cm³, no more than 0.7 g/cm³, no more than 0.6 g/cm³, no more than 0.5 g/cm³, no more than 0.4 g/cm³, no more than 0.3 g/cm³, no more than 0.2 g/cm³, no more than 0.1 g/cm³, no more than 0.08 g/cm³, no more than 0.06 g/cm³, no more than 0.04 g/cm³, no more than 0.02 g/cm³, no more than 0.01 g/cm³, no more than 0.008 g/cm³, no more than 0.006 g/cm³, no more than 0.004 g/cm³, no more than 0.002 g/cm³. In some cases, the density of the foam may be a combination of any of these, e.g., the density of the foam may be between 0.002 g/cm³ and 0.2 g/cm³.

In one set of embodiments, the foam is substantially planar. The foam may also have the same or a different thickness than the nonwoven structure. In some embodiments, the foam can have a smallest dimension of 38.1 cm (15 inches) or less, 30.48 cm (12 inches) or less, 27.94 cm (11 inches) or less, 25.4 cm (10 inches) or less, 22.86 cm (9 inches) or less, 20.32 cm (8 inches) or less, 17.78 cm (7 inches) or less, 15.24 cm (6 inches) or less, 12.7 cm (5 inches) or less, 10.16 cm (4 inches) or less, 7.62 cm (3 inches) or less, 6.35 cm (2.5 inches) or less, 5.08 cm (2 inches) or less, 3.81 cm (1.5 inches) or less, 2.54 cm (1 inch) or less, 1.91 cm (0.75 inches) or less, 1.27 cm (0.5 inches) or less, 0,635 cm (0.25 inches) or less, 0.254 cm (0.1 inches) or or less. In some cases, the foam may have a smallest dimension that is at least 0.254 cm (0.1 inches), at least 0.635 cm (0.25 inches), at least 1.27 cm (0.5 inches), at least 1.91 cm (0.75 inches), at least 2.54 cm (1 inch), at least 3.81 cm (1.5 inches), at least 5.08 cm (2 inches), at least 6.35 cm (2.5 inches), at least 7.62 cm (3 inches), at least 10.16 cm (4 inches), at least 12.7 cm (5 inches), at least 15.24 cm (6 inches), at least 17.78 cm (7 inches), at least 20.32 cm (8 inches), at least 22.86 cm (9 inches), at least 25.4 cm (10 inches), at least 27.94 cm (11 inches), at least 30.48 cm (12 inches). The foam may also fall within any combination of these; for instance, the foam can have a smallest dimension that is between 7.62 cm (3 inches) and 12.7 cm (5 inches).

The foam is immobilized to the nonwoven structure by any suitable technique. The foam can be directly attached to the nonwoven structure, e.g., as is shown in Fig. 1, or there may be one or more materials located between the foam and the nonwoven structure. Thus, for example, in the invention, the composite comprises a nonwoven structure comprising first fibers and second fibers, and a foam immobilized to the nonwoven structure. Any suitable technique can be used for immobilizing the foam and the nonwoven structure to each other, and/or to other materials, and in some cases, more than one technique may be used. Examples include, but are not limited to, adhesives or needling, as discussed below. In addition, in some embodiments, the nonwoven structure can wrap around or envelope the foam. For example, the nonwoven structure may be formed as a pocket that the foam is inserted into. In some cases, the nonwoven structure may be closed in order to contain the foam within the pocket, e.g., via needling, adhesives. adhesive may be used, in some embodiments, to attach the foam and the nonwoven structure to each other and/or to other materials within the composite. The adhesive may be added before and/or after the nonwoven structure is formed. If adhesives are used in more than one location within the composite, the adhesives can the same or different.

Examples of adhesives include epoxies, heat-sensitive adhesives, monomer- or polymer-based glues such as, but not limited to, acrylates, acrylonitriles, cyanoacrylates, acrylics, resorcinol glue, epoxy resins, epoxy putties, ethylene-vinyl acetates, nylons, olefins, phenol formaldehyde resins, polyamides, polyesters, polyester resins, polyethylenes, polypropylenes, polysulfides, polyurethanes, polyvinyl acetates, polyvinyl alcohols, polyvinyl chlorides and polyvinyl chloride emulsions, polyvinylpyrrolidones, rubber cements, silicones, styrene acrylic copolymers. As another example, in one set of embodiments, the adhesive is a pressure-sensitive adhesive. In some embodiments, the pressure-sensitive adhesive may comprise a polymer and a resin. The resin may be, for example, a rosin or a rosin derivative, a terpene or a modified terpene, an aliphatic, cycloaliphatic, or aromatic resins (e.g., C₅ aliphatic resins, C₉ aromatic resins, etc.), a hydrogenated hydrocarbon resin, silicate resins such as monofunctional trimethyl silanes reacted with quadrafunctional silicon tetrachloride, or a mixture of these any/or other resins (for example, a terpene-phenol resin). Examples of suitable polymers for the adhesive include, but are not limited to, acrylics, butyl rubber, ethylene vinyl acetate, natural rubber, nitriles, silicone rubbers, styrene block copolymers, styrene-butadiene-styrene copolymers, styrene-ethylene/butylene-styrene copolymers, styrene-ethylene/propylene copolymers, styrene-isoprene-styrene copolymers.

However, not all embodiments of the invention require the use of adhesives. For instance, in another set of embodiments, the foam and the nonwoven structure are needled together, and/or to other materials within the composite. In some cases, the foam and/or the nonwoven structure may be attached or immobilized together using suitable fibers or threads. One or more than one type of fiber or thread can be used, depending on the application. For example, in one set of embodiments, one or more fibers are inserted or needled through the foam or the nonwoven structure (and/or through other materials, if present) in order to immobilize these together. Examples of suitable fibers include any of those described herein, e.g., cotton or other plant fibers, wood fibers, animal fibers, glass fibers, fiberglass, carbon fibers, mineral fibers, metallic fibers, synthetic or polymeric fibers. In some cases, however, no separate immobilization fibers are added, and needling may be sufficient to attach or immobilize the foam and the nonwoven structure together (and/or to other materials, if present)

If needling techniques such as needlepunching or needlefelting are used, the needles may be inserted at any suitable density to attach or immobilize the foam and the nonwoven structure together, and/or to other materials in the composite. For example, the density of needle insertions may be at least 1 insertion/in², at least 0.46 insertions/cm² (3 insertions/in²), at least 0.78 insertions/cm² (5 insertions/in²), at least 1.55 insertions /cm² (10 insertions/in²), at least 4.65 insertions /cm² (30 insertions/in²), at least 0.15 insertions /cm² (50 insertions/in ²), at least 15.50 insertions /cm² (100 insertions/in²), at least 46.5 insertions /cm² (300 insertions/in²), at least 77.5 insertions /cm² (500 insertions/in²), at least 155 insertions /cm² (1,000 insertions/in²), at least 465 insertions /cm² (3,000 insertions/in²), at least 775 insertions /cm² (5,000 insertions/in²), at least 1550 insertions /cm² (10,000 insertions/in²), at least 4651 insertions /cm² (30,000 insertions/in²), at least 7751 insertions /cm² (50,000 insertions/in²), at least 15503 insertions /cm² (100,000 insertions/in² ) at least 46511 insertions /cm² (300,000 insertions/in²), at least 77519 insertions /cm² (500,000 insertions/in²), at least 155038 insertions /cm² (1,000,000 insertions/in²). In some cases the insertions may be limited so that the insertions do not substantially damage or destroy the foam. Thus, for example, there may be no more than 1,000,000 insertions/in², no more than 77519 insertions /cm² (500,000 insertions/in²), no more than 46511 insertions /cm² (300,000 insertions/in²), no more than 15503 insertions /cm² (100,000 insertions/in²), no more than 7751 insertions /cm² (50,000 insertions/in²), no more than 4651 insertions /cm² (30,000 insertions/in²), no more than 1550 insertions /cm² (10,000 insertions/in²), no more than 775 insertions /cm² (5,000 insertions/in²), no more than 465 insertions /cm² (3,000 insertions/in²), no more than 155 insertions /cm² (1,000 insertions/in²), no more than 77.5 insertions /cm² (500 insertions/in²), no more than 46.51 insertions /cm² (300 insertions/in²), no more than 15.50 insertions /cm² (100 insertions/in²), no more than7.75 insertions /cm² (50 insertions/in²), no more than 4.65 insertions /cm² (30 insertions/in²), no more than 1.55 insertions /cm² (10 insertions/in²). Combinations of any of the above insertion values are also possible in some embodiments.

The composite may also contain other materials or layers in addition to the nonwoven structure and the foam, in certain embodiments of the invention. For example, the composite can comprise other layers or materials such as backing or protective layers or materials, woven structures, other nonwoven structures, layers or materials that provide structural support or flexibility to the composite, layers or materials to provide flame resistance and/or thermal and/or acoustic insulation. In one set of embodiments, a composite may comprise a nonwoven structure and a foam as discussed herein, attached to an article such as those described in a U.S. patent application entitled "Composites and Articles Made From Nonwoven Structures," filed on March 15, 2013. As another example, a composite may comprise more than one nonwoven structure and/or more than one foam, each as described herein, optionally attached to any article described in the above U.S. patent application.

In one embodiment, one or more woven structures may be attached or immobilized to the nonwoven structure and/or the foam, and/or otherwise be present in the final composite. The one or more woven structures may be attached or immobilized by any suitable technique, e.g., via adhesion, needling, quilting, stichbonding, or the like, e.g., as discussed herein. The woven structures may have the same or different fiber composition than the nonwoven structure. Additional woven, if present, may be formed from any of the fibers discussed herein, and have any lengths, diameters, densities, etc. described herein with respect to nonwoven structures, in various embodiments of the invention.

For example, the composite may include more than one nonwoven structure and/or more than one foam layer. Examples of such structures are shown in Figs. 2-5. For example, in Fig. 2, composite 10 includes a first nonwoven structure 15, foam 20, and a second nonwoven structure 16; in Fig. 3, composite 10 includes nonwoven structure 15, first foam 20, and second foam 21; and in Fig. 4, composite 10 includes two separate nonwoven structures 15 and 16 and two separate foams 20 and 21. Fig. 5 shows composite 10, which includes nonwoven structure 15 and foam 20, separated by an intermediate material 19. As an example, intermediate material 19 may be a woven structure. As mentioned, if more than two foams are present, the two foams may independently have the same or different compositions; and, if more than two nonwoven structures are present, the two nonwoven structures may independently have the same or different compositions.

As another example, the foam and the nonwoven structure may be combined with other materials such as bulk holding materials, FRP (fiberglass reinforced panels) sheets, prepregs, veils, or the like to form the composite. In some cases, the pre-preg may comprise carbon fibers, fiberglass fibers, woven or nonwoven materials, etc. that are impregnated with resins such as epoxy resins, phenolic resins, or other resins such as those described herein.

As mentioned, the composite may have any suitable shape or size. For example, the composite may be substantially planar, as is generally depicted in Figs. 1-5. However, this is for ease of presentation, and in other embodiments, the composite need not have a substantially planar structure. For example, the composite, in some cases, may have a specific shape (e.g., an irregular shape, plane curve, manifold) that is useful for a certain application. As examples, the composite may be a shaped or molded as a component within a car, truck, train, ship, boat, aircraft, or other vehicle, as a floor covering (or part of a floor covering), as construction material (or as a part thereof). As a specific example, the composite may form part of the wall of an interior of a car, truck, train, ship, boat, aircraft, or other vehicle, and accordingly the composite may have a suitable shape for such an application.

In some cases, the composite has a degree of rigidity or structural stability such that the composite is self-supporting, e.g., such that the composite can maintain its shape regardless of orientation or positioning of the composite, and/or such that the composite does not collapse, change its shape, or visually sag under its own weight. In some cases, the composite has a specific, defined shape that the composite tries to return to when perturbed. In addition, in some embodiments, the composite may have sufficient structural stability such that the composite cannot be permanently deformed or bent by an unassisted human being of average strength; for example, the human being may be unable to significantly deform the composite, or the human being may be able to deform the composite, but upon release, the composite returns substantially to its original shape prior to the deformation.

Additionally, in some cases, the composite has a degree of rigidity or structural stability that allows it to bear loads (i.e., weight). For example, the composite may be able to bear a certain amount of weight without showing substantial deformation (e.g., deformation that can be readily identified by the naked eye). In some cases, the composite is able to bear at least 10% of its weight, at least 25% of its weight, at least 50% of its weight, at least 75% of its weight, at least 100% of its weight, at least 200% of its weight, at least 300% of its weight, or at least 500% of its weight, e.g., without showing substantial deformation that can be readily identified by the naked eye.

In certain embodiments, the composite (e.g., comprising a nonwoven structure and a foam) may show a surprising degree of fire or flame resistance. For example, the composite may resist burning or ignition (e.g., when exposed to an open flame). Although composites comprising foams and nonwoven materials exist in other applications, such composites typically do not exhibit high degrees of fire or flame resistance, and can easily ignite or burn under the proper conditions. It should be understood that such fire or flame resistance is not created solely through the selection of relatively nonflammable materials or the addition of flame retardants to the nonwoven structure and/or the foam within the composite, but also depends on a variety of other factors such as the arrangement of the fibers in the nonwoven structure, the density of fibers in the nonwoven structure, the permeability of the nonwoven structure and/or the foam, the cellular structure of the foam, the arrangement of the nonwoven structure relative to the foam, the thickness of the nonwoven structure and/or the foam. Without wishing to be bound by any theory, it is believed that the high surface area and the ability to gases to penetrate a nonwoven structure can, in some instances, cause even nonwoven structures formed from normally relatively nonflammable materials to exhibit a high degree of flammability. Merely selecting nonflammable materials for use within a composite is accordingly not necessarily sufficient to ensure that the resulting composite will also be nonflammable.

For example, in some embodiments, the nonflammability of a composite may be increased by selecting nonwoven materials that exhibit a relatively low degree of permeability to air, or other gases. For instance, as previously discussed, the nonwoven structure can be constructed and arranged such that some air (or other gases, e.g., flammable gases) can pass through the nonwoven structure, but not larger amounts that could potentially facilitate burning or combustion. Such a nonwoven structure may be advantageous because gases are permitted to pass or diffuse through and exit the nonwoven structure, rather than build up within or on one side of the nonwoven structure, but the gas flow does not reach levels where the exiting gases potentially facilitate increased burning or combustion. One simple screening test to identify such nonwoven structures is to create a pressure differential of 125 Pa (0.5 inch of water) across a nonwoven structure, place an open flame on the low pressure side, and determine if the open flame increases (e.g., becomes bigger or more intense) due to gas (e.g., air) passing across the nonwoven structure due to the pressure differential, for example, as compared to no such pressure differential. As another example of a screening test according to the invention, the composite is constructed and arranged such that, when the entire outer surface of the composite is exposed to a radiant heat flux of 1.7 W/cm² and an open pilot flame, the composite exhibits no flame propagation beyond 2 inches and no flame time beyond 3 seconds after exposure to the open pilot flame for 30 seconds. According to the invention, the nonwoven structure comprising first fibers and second fibers, as discussed herein, and a foam immobilized to the nonwoven structure is constructed and arranged to meet this test. The second fibers have a composition different from the first fibers. As yet another example of screening test, the composite may be constructed and arranged such that, when the composite (mounted horizontally or vertically) is exposed to a 927 degrees C (1700 degrees F) flame for 5 minutes, the flame does not penetrate the composite.

In the invention the composite is constructed and arranged such that, when the entire outer surface of the composite is exposed to a radiant heat flux of 1.7 W/cm² and an open pilot flame, the composite exhibits no flame propagation beyond 5.1 cm (2 inches) and no flame time beyond 3 seconds after exposure to the open pilot flame for 30 seconds. The composite of the invention meets this test and comprises a nonwoven structure comprising first fibers and second fibers, and a foam immobilized to the nonwoven structure. In the invention the first fibers comprise polyacrylonitrile and the second fibers comprise polyetherimide.

Such composites, due to their surprising degree of fire or flame resistance, may be useful in applications where fire safety is of great concern. In some embodiments, such composites may find use in vehicles such as cars, trucks, trains, ships, boats, aircraft or within buildings (e.g., within construction materials or floor coverings), where there is danger from fire. In certain cases, the nonwoven structure and/or the composite may satisfy the flammability test defined in 14 C.F.R. § 25(App. F)(VI) (2012) or the flame penetration resistance test defined in 14 C.F.R. § 25(App. F)(III) (2012). As an example, in one embodiment, the composite may comprise a nonwoven structure comprising first fibers and second fibers, e.g., as discussed herein, and a foam immobilized to or by the nonwoven structure, where the composite is constructed and arranged to satisfy this flammability test.

For instance, in one embodiment, a composite may be constructed and arranged to satisfy the flame penetration resistance test defined in 14 C.F.R. § 25(App. F)(III) (2012). The composite according to the invention comprises a nonwoven structure comprising first fibers and second fibers, and a foam immobilized to the nonwoven structure. In the invention, the first fibers comprise polyacrylonitrile and the second fibers comprise polyetherimide. As another example, a composite may be constructed and arranged to satisfy the flammability test defined in 14 C.F.R. § 25(App. F)(VI) (2012). The composite according to the invention comprises a nonwoven structure comprising first fibers and second fibers, and a foam immobilized to the nonwoven structure. In the invention, the first fibers comprise polyacrylonitrile and the second fibers comprise polyetherimide.

Such applications are often highly regulated, and many composites comprising foams and/or nonwoven materials cannot meet these tests. However, composites having properties such as those described herein can meet such regulations by controlling various factors such as the selection of nonflammable materials within the nonwoven structure and/or foam, the porosity or the permeability of the nonwoven structure, the cell structure of the foam, the thickness of the nonwoven structure and/or the foam, and the like, as is described herein.

In addition, in some embodiments, the composite may have a relatively high degree of soundproofing or acoustic insulation. In some embodiments, a relatively high degree of soundproofing or acoustic insulation is achieved using nonwoven structures and/or foams that do not have high permeabilities to air or other gases; since sound waves typically travel through air, nonwoven structures and/or foams having relatively low permeabilities to air may, in some cases, exhibit a high degree of soundproofing or acoustic insulation. The mass of the composite and/or its thickness may also affect the degree of soundproofing in some instances, e.g., thicker materials in general produce better acoustic insulation. However, it should be noted that some permeability may be required in certain cases, since materials that are too solid or have too little air permeability may effectively as a solid block of material with respect to acoustic waves and allow more sound transmission to occur. Accordingly, merely selecting materials for the composite that have relatively low permeability to air is not necessarily sufficient to guarantee that the resulting composite will be soundproof or act as a suitable acoustic insulator.

Acoustic insulation of a material can be determined, for example, as acoustic absorption (i.e., the absorption of sound waves into the material), and/or as acoustic transmission (i.e., the degree to which sound waves can pass through the material). Acoustic absorption is typically measured at specific frequencies. For instance, in one set of embodiments, the composite is has sufficient acoustic absorption such that, for sound at a frequency of 500 Hz (e.g., a sine wave), at least 10% of the sound is absorbed by the composite, and in some cases, at least 20%, at least 30%, at least 40%, at least 50%, at least 60%, at least 70%, or at least 80% of the sound is absorbed by the composite. In some cases, the composite is sufficiently soundproof such that, for sound at a frequency of 1 kHz, at least 10% of the sound is absorbed by the composite, and in some cases, at least 20%, at least 30%, at least 40%, at least 50%, at least 60%, at least 70%, or at least 80% of the sound is absorbed by the composite. In certain instances, the composite is sufficiently soundproof such that, for sound at a frequency of 1.5 kHz or 2.5 kHz, at least 10% of the sound is absorbed by the composite, and in some cases, at least 20%, at least 30%, at least 40%, at least 50%, at least 60%, at least 70%, or at least 80% of the sound is absorbed by the composite. In one set of embodiments, for sound that is evenly distributed between 20 Hz and 20 kHz, the composite is able to absorb at least 20%, at least 30%, at least 40%, or at least 50% of the sound. In some cases, the composite is constructed and arranged to absorb at least 70% of sound having a frequency of 500 Hz that is directed at the composite. As detailed above, the composite of the invention comprises a nonwoven structure comprising first fibers and second fibers, and a foam immobilized to the nonwoven structure. In the invention, the first fibers comprise polyacrylonitrile or the second fibers comprise polyetherimide. In some cases, however, no more than 95%, no more than 90%, no more than 85%, no more than 80%, no more than 75%, or no more than 70% of the sound is absorbed for any of the ranges described above.

In another set of embodiments, the composite may be able to prevent at least some sound waves from passing through the composite. For example, the sound waves may reflected, absorbed, diffused by the composite. In one set of embodiments, the composite may cause a reduction in acoustic transmission for a sound wave of 500 Hz of 5 dB or more, 10 dB or more, 15 dB or more, 20 dB or more, 25 dB or more, 30 dB or more, 35 dB or more, or 40 dB or more. In some cases, the composite may cause a reduction in acoustic transmission for a sound wave of 1.5 kHz or 2.5 kHz of 5 dB or more, 10 dB or more, 15 dB or more, 20 dB or more, 25 dB or more, 30 dB or more, 35 dB or more, or 40 dB or more.

Examples of testing methods that can be used to determine acoustic absorption and/or acoustic transmission, e.g., at levels such as those discussed above, include ASTM E1050 (Standard Test Method for Impedance and Absorption of Acoustical Materials Using a Tube, Two Microphones and a Digital Frequency Analysis System), ASTM E2611 (Standard Test Method for Measurement of Normal Incidence Sound Transmission of Acoustical Materials Based on the Transfer Matrix Method), ASTM C522 (Standard Test Method for Airflow Resistance of Acoustical Materials), ASTM C423 (Standard Test Method for Sound Absorption and Sound Absorption Coefficients by the Reverberation Room Method), or ASTM E90 or ASTM E90-2 (Standard Test Method for Laboratory Measurement of Airborne Sound Transmission Loss of Building Partitions and Elements. In addition, in some embodiments, the composite can be both relatively flame resistant and acoustically insulating.

Another aspect of the present invention is generally directed to methods for preparing composites such as those described herein. In the method of the invention, a composite is prepared by forming a nonwoven structure from one or more types of fibers by entangling the fibers. A foam layer is then attached to the nonwoven structure; in some cases, other materials may also be present, for example, between the foam and the nonwoven structure, or otherwise form part of the composite. Examples include woven structures, backing layers, protective layers, layers or materials that provide structural support or flexibility to the composite, layers or materials to provide flame resistance and/or thermal and/or acoustic insulation. Such materials can be added to the nonwoven structure and/or the foam, or otherwise form part of the composite, by any suitable technique. Non-limiting examples include adhesion, needling, quilting, stichbonding, enveloping. For instance, in one embodiment, a woven structure may be needled into a nonwoven structure and/or a foam.

Thus, the invention is directed to a method comprising acts of entangling first fibers and second fibers together to form a nonwoven structure, attaching foam to the nonwoven structure, and heating and/or compressing the foam and the nonwoven structure to form a composite. Examples of suitable temperatures and/or pressures are discussed in more detail below. Optionally, other materials may be added, e.g., a flame retardant, an antimicrobial agent, or the like; the other materials can be added at any suitable point, e.g., before or after formation of the composite, or before or after formation of the nonwoven structure, etc. The nonwoven structure and the foam are heated and/or compressed together, e.g., to mold the composite into a desired shape and/or thickness.

The fibers used to form the nonwoven structure can be entangled together using various techniques, although the fibers are typically not knitted or weaved together, e.g., as in a fabric material. Examples of suitable techniques include, but are not limited to, needlepunching or needlefelting, thermal bonding, hydroentaglement, ultrasonic bonding, or chemical bonding. Using techniques such as these, the fibers forming the nonwoven structure can be entangled together to form the nonwoven structure. More than one type of fiber is present, and the fibers may be mixed together prior to forming the nonwoven structure, e.g., mechanically. In addition, in some embodiments, the fibers may be substantially aligned, or carded or combed together, prior to forming the nonwoven structure.

For example, in one set of embodiments, the fibers are entangled together to form the nonwoven structure using thermal bonding techniques. The fibers may be placed together and heated to form the nonwoven structure. For instance, in some cases, heat sealers or ovens may be applied to the fibers, and/or the fibers may be calendered through heated rollers (optionally under pressure) in order to form the nonwoven structure. In hydroentaglement, the fibers are entangled together to form the nonwoven structure using water jets. The fibers may also be entangled together using air instead of water, in some embodiments, optionally using ultrasound. Fibers may also be entangled together in chemical bonding techniques using latex emulsion or solution polymers to chemically assemble the fibers into a nonwoven structure. In some cases, binder fibers or powders can also be used to soften or partially melt the fibers to form the nonwoven structure.

In needlepunching or needlefelting, a plurality of needles, typically solid, are used to mechanical entangle or intertwine individual fibers together to form the nonwoven structure. This can be done, for example, by mechanically moving or "punching" the needles repeatedly up and down over the fibers to entangle the fibers together to form the nonwoven structure. In some cases, this may be done at relatively high densities, e.g., at least 0.155 insertions/ cm² (1 insertion/in²), at least 0.46 insertions/ cm² (3 insertions/in²), at least 0.775 insertions/ cm² (5 insertions/in²), at least 1.55 insertions/ cm² (10 insertions/in²), at least 4.65 insertions/ cm² (30 insertions/in²), at least 7.75 insertions/ cm² (50 insertions/in²), at least 15.50 insertions/ cm² (100 insertions/in²), at least 46.51 insertions/ cm² (300 insertions/in²), at least 77.5 insertions/ cm² (500 insertions/in²), at least 155 insertions/ cm² (1,000 insertions/in²), at least 465 insertions/ cm² (3,000 insertions/in²), at least 775 insertions/ cm² (5,000 insertions/in²), at least 1550 insertions/ cm² (10,000 insertions/in²), at least 4651 insertions/ cm² (30,000 insertions/in²), at least 7751 insertions/ cm² (50,000 insertions/in²), at least 15503 insertions/ cm² (100,000 insertions/in²), at least 46511 insertions/ cm² (300,000 insertions/in²), at least 77519 insertions/ cm² (500,000 insertions/in²), at least 155038 insertions/ cm² (1,000,000 insertions/in²).

The nonwoven structure is attached or immobilized to or by a foam, or to other materials such as those discussed herein, after or during formation of the nonwoven structure. In some cases, the foam and/or the nonwoven structure is planar, e.g., so that the foam can be attached to one surface of the nonwoven structure, although this is not a requirement in all cases. As mentioned, any suitable technique can be used, including adhesives or needling techniques such as needlepunching or needlefelting, and/or combinations thereof. If an adhesive is used, the adhesive may be attached to any suitable material within the composite. For instance, an adhesive may be sprayed or painted onto one or both of the nonwoven structure or the foam, to other materials forming the composite. In some cases, the adhesive is present as a separate layer or material within the composite, e.g., positioned between the foam and the nonwoven structure. In some cases, the adhesive is also activated to attach or immobilize the materials or layers together to form the composite. For example, pressure-sensitive adhesives may be activated upon application of suitable pressure, heat sensitive adhesives may be activated upon application of suitable temperatures (e.g., to melt or otherwise activate the heat sensitive adhesive), or certain types of epoxies or glues may be activated using suitable activators such as ultraviolet light.

Needling techniques such as needlepunching or needlefelting techniques may also be used in accordance with certain embodiments of the invention, e.g., to attach or immobilize the nonwoven structure to the foam. Needling may be performed independently of the formation of the nonwoven structure, or in some cases, they may be performed at the same time. However, the density of needling insertions to attach the foam (and/or other materials) to the nonwoven structure need not be the same as the density of needling insertions used to form the nonwoven structure, although they can be the same in some embodiments.

The nonwoven structure and the foam are heated and/or pressed to form the final composite. Heating/compression may be used in some cases to shape or mold the composite, e.g., into a desired shape and/or thickness and/or density and/or porosity. The nonwoven structure and the foam may be heated and/or pressed when directly in contact with each other, or there may be other materials present between the nonwoven structure and the foam. In addition, other materials may also be present as well, e.g., to form the composite. In addition, in certain instances, heating or pressing may be used to activate heat-sensitive adhesives or pressure-sensitive adhesives, respectively, that may be present within the composite.

If heating is used, any suitable technique for heating can be used. Examples of suitable techniques include heating within an oven or other enclosed temperature controlled environment, electrically resistive heating, radiative heating, exposure to radiation (e.g., infrared radiation), application of heat sources, e.g. via direct surface contact, to the nonwoven structure and/or the foam. The materials may be heated to any suitable temperature, for example, to temperatures of at least 15. 6 °C (60 °F), at least 26.7 °C (80 °F), at least 37.7 °C (100 °F), at least 48.8 °C (120 °F), at least 60.0 °C (140 °F), at least 71.1 °C (160 °F), at least 82.3 °C (180 °F), at least 93.4 °C (200 °F), at least 104.5 °C (220 °F), at least 115.6 °C (240 °F), at least 126.7 °C (260 °F), at least 137.8 °C (280 °F), at least 148.9 (300 °F), at least 162.8 °C (325 °F), at least 176.7 (350 °F), at least 190.6 °C (375 °F), at least 204.5 °C (400 °F), etc. However, in some cases, the temperature may be no more than 260 °C (500 °F), no more than 232.3 °C (450 °F), no more than 204.5 °C (400 °F), no more than 190.6 °C (375 °F), no more than 176.7 °C (350 °F), no more than 162.8 °C (325 °F), no more than 148.9 °C (300 °F), no more than 137.8 °C (280 °F), no more than 126.7 °C (260 °F), no more than 115.6 °C (240 °F), no more than 104.5 °C (220 °F), no more than 93.4 °C (200 °F), no more than 82.3°C (180 °F), no more than 71.1 °C (160 °F), no more than 60.0 °C (140 °F), no more than 48.9 °C (120 °F), no more than 37.8 °C (100 °F), no more than 26.7 °C (80 degrees F). In some embodiments of the invention, the materials can also be heated to a temperature that is within any of these values, e.g., between 37.8 °C (100 °F) and 93.4 °C (200 °F), to form the composite.

In some cases, the material may be heated to a temperature greater than the glass transition temperature of a polymer within the nonwoven structure, and in some cases, below the melting point of the polymer. Without wishing to be bound by any theory, it is believed that heating the polymer to a temperature between the glass transition temperature and the melting temperature may serve to cause the polymer to increase in density or crystallinity. For example, the density or specific gravity of the polymer may increase; this may cause the polymer to become denser, which may also cause the resulting material to become stiffer. In addition, after heating, the degree of crystallinity within the polymer may increase by at least 5%, at least 10%, at least 15%, at least 20%, at least 25%, etc. In some cases, the crystallinity may increase by no more than 30%, no more than 25%, no more than 20%, no more than 15%, no more than 10% or combinations of these (e.g., between 10% and 20%). In general, more crystalline polymers may exhibit greater resistance to heat transfer or lower heat capacity.

Polymers are typically composed of long molecular chains which are irregular and often entangled, depending on their length. While most polymers are generally disordered, such polymers typically will exhibit some degree of alignment of the polymer chains, and those regions are said to be aligned, creating regions called semicrystalline regions. The semicrystalline regions are typically roughly 1 micrometer in size, although the degree of crystallinity and the size of the semicrystalline regions may vary based on factors such as the size and orientation of the molecular chains, the synthesis technique, and the monomers forming the polymer. The degree of crystallinity in a polymer can be determined using techniques such as X-ray diffraction (XRD) or other X-ray scattering techniques known to those of ordinary skill in the art.

In addition, pressure is applied to the materials to form the composite, e.g., instead of or in addition to heating. If both heating and pressure are used, the materials may be subject to pressure before, during, and/or after heating, depending on the application. In addition, any suitable technique can be used to apply pressure to the nonwoven structure and the foam, including applying the pressure pneumatically, mechanically, hydraulically, and/or placing the nonwoven structure and the foam in a high-pressure gas chamber.

In one set of embodiments, the applied pressure may be at least 0.34 bar (5 psi) (gauge pressure), at least 0.68 bar (10 psi), at least 1.7 bar (25 psi), at least 3.4 bar (50 psi), at least 6.8 bar (100 psi), at least 8.5 bar (125 psi), at least 10.2 bar (150 psi), at least 13.6 bar (200 psi), at least 17 bar (250 psi), at least 20.4 bar (300 psi), at least 27.2 bar (400 psi), at least 34 bar (500 psi), at least 40.8 bar (600 psi), at least 47.6 bar (700 psi), at least 54.4 bar (800 psi), at least 61.2 bar (900 psi), at least 68 bar (1,000 psi), at least 85 bar (1,250 psi), at least 102 bar (1,500 psi), at least 119 bar (1,750 psi), at least 136 bar (2,000 psi), at least 153 bar (2,250 psi), at least 170 bar (2,500 psi), at least 170 bar (2,500 psi), at least 187 bar (2,750 psi), at least 204 bar (3,000 psi), at least 238 bar (3,500 psi), at least 272 bar (4,000 psi), at least 306 bar (4,500 psi), at least 340 bar (5,000 psi). (1 psi is 6894.757 Pa, and 0.068 bar.) The pressure may also be, in some embodiments, no more than 306 bar (4,500 psi), no more than 272 bar (4,000 psi), no more than 238 bar (3,500 psi), no more than 204 bar (3,000 psi), no more than 187 bar (2,750 psi), no more than 170 bar (2,500 psi), no more than 170 bar (2,500 psi), no more than 153 bar (2,250 psi), no more than 136 bar (2,000 psi), no more than 119 bar (1,750 psi), no more than 102 bar (1,500 psi), no more than 85 bar (1,250 psi), no more than 68 bar (1,000 psi), no more than 61.2 (900 psi), no more than 54.4 bar (800 psi), no more than 47.6 bar (700 psi), no more than 40.8 (600 psi), no more than 34 bar (500 psi), no more than 27.2 bar (400 psi), no more than 20.4 bar (300 psi), no more than 17 bar (250 psi), no more than 13.6 bar (200 psi), no more than 10.2 (150 psi), no more than 8.5 (125 psi), no more than 6.8 bar (100 psi), no more than 3.4 bar (50 psi), no more than 1.7 bar (25 psi), no more than 0.68 bar (10 psi). In addition, the pressure can be contained within any of these values, e.g., a pressure of between 6.8 bar (100 psi) and 27.2 bar (400 psi).

Such heat and/or pressures may be applied for any suitable time. The heat and/or pressure may be steadily applied, or in some cases, the heat and/or pressure may vary with respect to time. If both heat and pressure are used, the times each are applied may be the same or different, and can be, for example, 1 minute or more, 2 minutes or more, 3 minutes or more, 4 minutes or more, 5 minutes or more, 6 minutes or more, 7 minutes or more, 8 minutes or more, 9 minutes or more, 10 minutes or more, 12 minutes or more, 15 minutes or more, 20 minutes or more, 25 minutes or more, 30 minutes or more, 35 minutes or more, 40 minutes or more, 45 minutes or more, 50 minutes or more, 55 minutes or more, 60 minutes or more.

The method of the invention comprises entangling first fibers and second fibers together to form a nonwoven structure, attaching foam to the nonwoven structure, and heating and/or compressing the foam and the nonwoven structure to form a composite. For instance, in the invention, the composite, when the entire outer surface of the composite is exposed to a radiant heat flux of 1.7 W/cm² and an open pilot flame, may exhibit no flame propagation beyond 5.1 cm (2 inches) and no flame time beyond 3 seconds after exposure to the open pilot flame for 30 seconds.

In some embodiments, other processes can also be applied to a nonwoven structure and/or the foam, e.g., to increase its rigidity or structural stability, in addition or instead of heating and/or pressure. Examples include electromagnetic energy (e.g., thermal, ultraviolet radiation), acoustical energy (e.g., ultrasonic energy), chemical enhancement (e.g., salting with other crystal structures), and/or physical manipulation (e.g., elongation, compaction, stretching). In some cases, more than one of these may be applied, for example, serially, simultaneously.

For example, in one set of embodiments, ultrasound is applied to the nonwoven structure and/or the foam. The ultrasound may have any suitable frequency, e.g., at least 15 kHz, at least 20 kHz, at least 25 kHz, at least 30 kHz, at least 35 kHz, at least 40 kHz, at least 45 kHz, at least 50 kHz and may be applied using any suitable technique, e.g., an ultrasonic transducer such as those commercially available. In some cases, the frequency is no more than 60 kHz, no more than 50 kHz, no more than 45 kHz, no more than 40 kHz, no more than 35 kHz, no more than 30 kHz, no more than 25 kHz, no more than 20 kHz, etc. In addition, the power may be at least 50 W, at least 75 W, at least 100 W, at least 150 W, at least 200 W, etc. The ultrasound can also be applied for any length of time, e.g., for 5 minutes or more, 10 minutes or more, 12 minutes or more, 15 minutes or more, 20 minutes or more, 25 minutes or more, 30 minutes or more, 35 minutes or more, 40 minutes or more, 45 minutes or more, 50 minutes or more, 55 minutes or more, 60 minutes or more.

## Claims

1. A composite, comprising:
a nonwoven structure comprising first fibers comprising polyacrylonitrile and second fibers comprising polyetherimide; and
a foam immobilized to the nonwoven structure,
wherein the composite is constructed and arranged such that, when the entire outer surface of the composite is exposed to a radiant heat flux of 1.7 W/cm² and an open pilot flame, the composite exhibits no flame propagation beyond 5.08 cm (2 inches) and no flame time beyond 3 seconds after exposure to the open pilot flame for 30 seconds.

2. The composite of claim 1, wherein the foam comprises a melamine foam, a polyurethane foam, polyvinylidene fluoride foam, a polyimide foam, or a polyetherimide foam.

3. The composite of any one of claims 1- 2, wherein the foam has an average cell size of less than 1 mm, as determined by microscopy.

4. The composite of any one of claims 1-3, wherein the nonwoven structure is planar.

5. The composite of claim 4, wherein the foam is immobilized to one surface of the planar nonwoven structure.

6. The composite of any one of claims 1-5, wherein the foam has a smallest dimension of less than 10.2 cm (4 inches), preferably less than 5.1 cm (2 inches).

7. The composite of any one of claims 1-6, further comprising an adhesive positioned between the foam and the nonwoven structure.

8. The composite of claim 7, wherein the adhesive comprises a pressure-sensitive adhesive or a heat-sensitive adhesive.

9. The composite of any one of claims 1-8, wherein the first fibers have an average linear mass density of between 0.11 tex and 0.44 tex (1 Denier and 4 Denier), and/or wherein the second fibers have an average linear mass density of between 0.11 tex and 1.78 tex (1 Denier and 16 Denier), preferably between 0.11 tex and 0.44 tex (1 Denier and 4 Denier).

10. The composite of any one of claims 1-9, wherein the first fibers have an average length of between 2.6 cm (1 inch) and 15.2 cm (6 inches), and/or wherein the second fibers have an average length of between 2.6 cm (1 inch) and 15.2 cm (6 inches).

11. The composite of any one of claims 1-10, wherein the first fibers have an average diameter of between 1 micrometer and 30 micrometers, and/or wherein the second fibers have an average diameter of between 1 micrometer and 30 micrometers.

12. The composite of any one of claims 1-11, wherein the mass ratio of first fibers to second fibers in the nonwoven structure is between 10:1 and 1:10.

13. The composite of any one of claims 1-12, wherein the nonwoven structure comprises a flame retardant, wherein the flame retardant preferably comprises an organophosphate or wherein the flame retardant is preferably substantially hydrophobic or wherein the flame retardant preferably has a water contact angle of greater than 90°.

14. The composite of any one of claims 1-13, wherein the nonwoven structure further comprises para-aramid fibers.

15. A method of making a composite as defined in any preceding claim, the method comprising:
entangling first fibers and second fibers together to form a nonwoven structure;
attaching foam to the nonwoven structure; and
heating and/or compressing the foam and the nonwoven structure to form the composite.

## Patentansprüche

1. Verbund, enthaltend:
eine Vliesstruktur, enthaltend erste Fasern, enthaltend Polyacrylnitril, und zweite Fasern, enthaltend Polyetherimid, und
einen Schaum, der mit der Vliesstruktur immobilisiert ist,
worin der Verbund so konstruiert und arrangiert ist, dass dann, wenn die gesamte äußere Oberfläche des Verbunds einem Strahlungswärmefluss von 1,7 W/cm² und einer offenen Zündflamme ausgesetzt ist, der Verbund keine Flammpropagation jenseits von 5,08 cm (2 inch) und keine Flammzeit jenseits von 3 Sekunden nach dem Aussetzen gegenüber der offenen Zündflamme für 30 Sekunden entfaltet.

2. Verbund gemäß Anspruch 1, worin der Schaum einen Melaminschaum, Polyurethanschaum, Polyvinylidenfluoridschaum, Polyimidschaum oder Polyetherimidschaum enthält.

3. Verbund gemäß einem der Ansprüche 1 bis 2, worin der Schaum eine durchschnittliche Zellgröße von weniger als 1 mm hat, bestimmt durch Mikroskopie.

4. Verbund gemäß einem der Ansprüche 1 bis 3, worin die Vliesstruktur planar ist.

5. Verbund gemäß Anspruch 4, worin der Schaum an einer Oberfläche der planaren Vliesstruktur immobilisiert ist.

6. Verbund gemäß einem der Ansprüche 1 bis 5, worin der Schaum eine kleinste Dimension von weniger als 10,2 cm (4 inch), bevorzugt weniger als 5,1 cm (2 inch) hat.

7. Verbund gemäß einem der Ansprüche 1 bis 6, weiterhin enthaltend ein Adhäsiv, das zwischen dem Schaum und der Vliesstruktur positioniert ist.

8. Verbund gemäß Anspruch 7, worin das Adhäsiv ein druckempfindliches Adhäsiv oder ein wärmeempfindliches Adhäsiv enthält.

9. Verbund gemäß einem der Ansprüche 1 bis 8, worin die ersten Fasern eine durchschnittliche lineare Massendichte zwischen 0,11 tex und 0,44 tex (1 Denier und 4 Denier) haben und/oder worin die zweiten Fasern eine durchschnittliche lineare Massendichte zwischen 0,11 tex und 1,78 tex (1 Denier und 16 Denier), bevorzugt zwischen 0,11 tex und 0,44 tex (1 Denier und 4 Denier) haben.

10. Verbund gemäß einem der Ansprüche 1 bis 9, worin die ersten Fasern eine durchschnittliche Länge zwischen 2,6 cm (1 inch) und 15,2 cm (6 inch) haben und/oder worin die zweiten Fasern eine durchschnittliche Länge zwischen 2,6 cm (1 inch) und 15,2 cm (6 inch) haben.

11. Verbund gemäß einem der Ansprüche 1 bis 10, worin die ersten Fasern einen durchschnittlichen Durchmesser zwischen 1 und 30 µm haben und/oder worin die zweiten Fasern einen durchschnittlichen Durchmesser zwischen 1 und 30 µm haben.

12. Verbund gemäß einem der Ansprüche 1 bis 11, worin das Massenverhältnis der ersten Fasern zu den zweiten Fasern in der Vliesstruktur zwischen 10:1 und 1:10 ist.

13. Verbund gemäß einem der Ansprüche 1 bis 12, worin die Vliesstruktur ein flammwidriges Mittel enthält, worin das flammwidrige Mittel bevorzugt ein Organophosphat enthält oder worin das flammwidrige Mittel bevorzugt im Wesentlichen hydrophob ist oder worin das flammwidrige Mittel bevorzugt einen Wasserkontaktwinkel von mehr als 90° hat.

14. Verbund gemäß einem der Ansprüche 1 bis 13, worin die Vliesstruktur weiterhin Paraamidfasern enthält.

15. Verfahren zur Erzeugung eines Verbunds wie in einem der vorhergehenden Ansprüche definiert, wobei das Verfahren enthält:
Verwickeln von ersten Fasern und zweiten Fasern miteinander, zur Bildung einer Vliesstruktur,
Befestigen von Schaum an die Vliesstruktur und
Erwärmen und/oder Komprimieren des Schaums und der Vliesstruktur, zur Bildung des Verbunds.

## Revendications

1. Composite, comprenant :
une structure non tissée comprenant des premières fibres comprenant du polyacrylonitrile et des secondes fibres comprenant du polyétherimide ; et
une mousse immobilisée sur la structure non tissée,
dans lequel le composite est construit et agencé de sorte que, lorsque la surface extérieure entière du composite est exposée à un flux de chaleur radiant de 1,7 W/cm² et à une flamme pilote ouverte, le composite ne présente aucune propagation de flamme au-delà de 5,08 cm (2 pouces) et aucune durée de flamme au-delà de 3 secondes après exposition à la flamme pilote ouverte pendant 30 secondes.

2. Composite selon la revendication 1, dans lequel la mousse comprend une mousse de mélamine, une mousse de polyuréthane, une mousse de polyfluorure de vinylidène, une mousse de polyimide, ou une mousse de polyétherimide.

3. Composite selon l'une quelconque des revendications 1 à 2, dans lequel la mousse a une taille de cellule moyenne de moins de 1 mm, comme déterminé par microscopie.

4. Composite selon l'une quelconque des revendications 1 à 3, dans lequel la structure non tissée est plane.

5. Composite selon la revendication 4, dans lequel la mousse est immobilisée sur une surface particulière de la structure non tissée plane.

6. Composite selon l'une quelconque des revendications 1 à 5, dans lequel la mousse a une dimension la plus petite de moins de 10,2 cm (4 pouces), de préférence moins de 5,1 cm (2 pouces).

7. Composite selon l'une quelconque des revendications 1 à 6, comprenant en outre un adhésif positionné entre la mousse et la structure non tissée.

8. Composite selon la revendication 7, dans lequel l'adhésif comprend un adhésif sensible à la pression ou un adhésif sensible à la chaleur.

9. Composite selon l'une quelconque des revendications 1 à 8, dans lequel les premières fibres ont une masse volumique linéaire moyenne entre 0,11 tex et 0,44 tex (1 Denier et 4 Denier), et/ou dans lequel les secondes fibres ont une masse volumique linéaire moyenne entre 0,11 tex et 1,78 tex (1 Denier et 16 Denier), de préférence entre 0,11 tex et 0,44 tex (1 Denier et 4 Denier).

10. Composite selon l'une quelconque des revendications 1 à 9, dans lequel les premières fibres ont une longueur moyenne entre 2,6 cm (1 pouce) et 15,2 cm (6 pouces) et/ou dans lequel les secondes fibres ont une longueur moyenne entre 2,6 cm (1 pouce) et 15,2 cm (6 pouces).

11. Composite selon l'une quelconque des revendications 1 à 10, dans lequel les premières fibres ont un diamètre moyen entre 1 micromètre et 30 micromètres, et/ou dans lequel les secondes fibres ont un diamètre moyen entre 1 micromètre et 30 micromètres.

12. Composite selon l'une quelconque des revendications 1 à 11, dans lequel le rapport en masse des premières fibres sur les secondes fibres dans la structure non tissée est entre 10:1 et 1:10.

13. Composite selon l'une quelconque des revendications 1 à 12, dans lequel la structure non tissée comprend un ignifugeant, dans lequel l'ignifugeant comprend de préférence un composé organophosphoré ou dans lequel l'ignifugeant est de préférence sensiblement hydrophobe ou dans lequel l'ignifugeant a de préférence un angle de contact avec l'eau supérieur à 90°.

14. Composé selon l'une quelconque des revendications 1 à 13, dans lequel la structure non tissée comprend en outre des fibres de para-aramide.

15. Procédé de fabrication d'un composite tel que défini selon l'une quelconque des revendications précédentes, le procédé comprenant :
l'entremêlement de premières fibres et de secondes fibres ensemble pour former une structure non tissée ;
l'attachement de mousse à la structure non tissée ; et
le chauffage et/ou la compression de la mousse et de la structure non tissée pour former le composite.
